# DEMANDE DE BREVET EUROPEEN

(11) **EP 4 435 063 A1**
(43) Date de publication de la demande: **25.09.2024**
(21) Numéro de dépôt: 24157303.9
(22) Date de dépôt: 13.02.2024
(51) Int. Cl.: C09D 7/61, E04F 15/00, C08K 3/26, C08L 27/06, C09D 7/40, E04F 13/18, E04F 15/10

(54) **REVETEMENT DE SOL OU MUR**

(30) Priorité: 24.03.2023 FR 2302812
(71) Demandeur: GERFLOR, 69009 Lyon (FR)
(72) Inventeur: BALAMOUTOFF, Alexia, 69009 LYON (FR); CHASSE, Coralie, 69009 LYON (FR); ESBELIN, Christian, 69009 LYON (FR)
(74) Mandataire: Cabinet Laurent & Charras

(57) **Abrégé**

L'invention concerne un revêtement de sol ou mur comprenant au moins une couche composée de matière plastique, tel que du polychlorure de vinyle, et de charges minérales, notamment entre 30 et 300 PCR de charges minérales, remarquable en ce que les charges minérales sont constituées d'au moins 25%, et de préférence de 50 à 100% de charges minérales biosourcées non fossiles.

## Description

### Domaine technique

L'invention se rapporte au domaine technique des revêtements de sols et murs pouvant se présenter sous la forme d'un rouleau ou sous la forme d'un panneau, d'une dalle, d'une lame, ou similaire.

L'invention concerne un tel revêtement comprenant au moins une couche composée de matière plastique et de charges, ainsi que son procédé de fabrication

### Art antérieur

Il est connu de l'art antérieur des revêtements de sols ou murs comprenant au moins une couche composée de matière plastique, tel que du PVC, éventuellement plastifié, et de charges minérales, par exemple dans une quantité comprise entre 30 et 300 PCR (pour cent part de résine).

La charge minérale permet de modifier les propriétés de la matière plastique utilisée. Dans le cas du PVC, la charge minérale couramment utilisée est par exemple du carbonate de calcium.

L'ajout de charges minérales permet d'améliorer la résistance à la dilatation et au poinçonnement d'une couche obtenue à partir de PVC. La couche obtenue peut également être rigidifiée en fonction du taux de charge de la composition.

Les charges utilisées dans la fabrication de revêtements de sol et murs composés de matière plastique sont toutes issues de procédés d'extraction en carrières ou mines. Cette opération implique une consommation importante de matière vierge et non renouvelable à échelle de temps humaine. L'extraction de ces charges entraine également des nuisances importantes sur l'environnement direct du lieu d'extraction, notamment de grandes quantités de poussières, du bruit, ainsi qu'un fort impact visuel pendant de longues années suite à l'exploitation d'un lieu. D'autre part, l'extraction et le transport de ces charges minérales émet une quantité importante de CO₂ qui contribue lourdement à l'empreinte carbone des revêtements les utilisant.

Les producteurs de revêtements de sols et murs sont donc à la recherche de solutions permettant de diminuer l'impact de leurs produits sur l'environnement, dès leur fabrication et tout au long de leur durée de vie.

### Exposé de l'invention

L'un des buts de l'invention est donc de diminuer l'impact environnemental d'un revêtement de sol ou mur comprenant au moins une couche composée d'une matière plastique et de charges minérales, tout en gardant des propriétés mécaniques et d'usage satisfaisantes. L'invention a notamment pour but de diminuer l'extraction de matière vierge et l'impact CO₂ lié à la fabrication du revêtement de sol ou mur.

À cet effet, il a été mis au point un revêtement de sol ou mur comprenant au moins une couche composée de matière plastique et de charges minérales, notamment dans une quantité comprise entre 30 et 300 PCR.

La matière plastique peut être choisie parmi les polyoléfines, telles que le polyéthylène (PE) et le polypropylène (PP), le polychlorure de vinyle (PVC), le polybutyral de vinyle (PVB), l'acide polylactique (PLA), le polyuréthane thermoplastique (TPU), les dérivés cellulosiques, le linoléum, les élastomères, seuls ou en mélange.

Selon l'invention, les charges minérales sont constituées d'au moins 25%, et de préférence de 50 à 100% de charges minérales biosourcées non fossiles, c'est-à-dire qu'elles ne sont pas issues de carrière de carbonate de calcium par exemple.

Les charges utilisées sont donc dites renouvelables, sur une échelle de temps d'une centaine d'années, par exemple 150 ans, et avec un impact environnemental réduit par rapport à celui de l'exploitation directe de carbonate de calcium issu de carrière, lequel est épuisable et dit non renouvelable sur une échelle de temps d'une centaine d'années.

La différence entre une charge minérale biosourcée fossile et non fossile se fait par une datation au carbone 14. Pour cela, on mesure, pour une charge minérale donnée, le pourcentage de carbone biosourcé par rapport à la quantité totale de carbone. Cette mesure est obtenue en calculant le pourcentage de carbone 14 mesuré dans un échantillon par rapport à un échantillon de référence (NIST SRM 4990C) et permet de définir un pourcentage de carbone moderne dit biosourcé non fossile ou biogénique, et appelé « pMC ». Bien entendu, et de manière connue, il ne sera pas tenu compte du carbone 14 présent dans le dioxyde de carbone dans l'air au moment de la mesure.

Le pourcentage de carbone provenant de sources « biosourcées non fossiles », par exemple des sous-produits végétaux ou animaliers, est ainsi différencié du carbone provenant de sources fossiles, datant de plus de 40000 ans. Ainsi une charge minérale totalement biosourcée contient 100% de carbone moderne provenant de sources non fossiles issues de plantes ou de sous-produits animaliers, a contrario 0 % de carbone biosourcé indique qu'un matériau ne contient que du carbone issu de sources fossiles. Une valeur intermédiaire représente un mélange de sources non fossiles et fossiles.

Selon l'invention, les charges minérales biosourcées non fossiles contiennent au moins 70%, préférentiellement au moins 85% et plus préférentiellement 100% de carbone moderne (pMC).

Une autre méthode de mesure de la teneur en matière minérale biosourcée d'un échantillon peut également être déterminée par la norme EN16785 -1 de janvier 2016.En pratique, il s'agit de préférence d'utiliser des charges biosourcées non fossiles issues de coproduits, c'est-à-dire qu'elles sont le résultat d'une autre activité. La revalorisation de sous-produits / déchets d'une « industrie primaire » (ex. ostréiculture) est bien entendu plus favorable d'un point de vue environnemental que l'exploitation directe de carrière de carbonate de calcium. La charge biosourcée non fossile est revalorisée et regénérée naturellement et rapidement (à l'échelle de temps d'une centaine d'années, par exemple 150 ans).

Il peut s'agir par exemple de charges biosourcées non fossiles comprenant, de préférence au moins 90%, de poudre de carbonate de calcium, par exemple issue de coquilles de mollusques, tels que des huîtres, des Saint-Jacques, des moules, de coquilles d'oeufs, de coquilles d'escargot, d'os de seiche, de lithotamnes, seul ou en mélange.

Pour les coquillages, il s'agit de préférence de coquillages morts triés lors de l'exploitation de parcs d'huîtres ou de moules. Pour les oeufs, de coquilles mises de côté par les casseries qui séparent le blanc des jaunes pour de nombreuses applications industrielles. Dans les deux cas, ces coquilles ne peuvent pas être larguées dans la nature sans traitement préalable (hygiénisation) sous risque de causer des contaminations bactériennes, ce qui engendre un coût du traitement, difficilement compensable pour un simple relargage. Valoriser les coquilles comme charges minérales d'une couche de revêtement de sol ou mur composée de plastique leur donne de la valeur, tout en diminuant l'impact environnemental du revêtement de sol.

Il peut s'agir également de charges biosourcées non fossiles comprenant des cendres volantes issues d'une combustion de biomasse, telle qu'une combustion de bois, de liège, de fibres végétales, de boues de stations d'épuration, de rafles de maïs, de miscanthus, seules ou en mélange.

D'une manière connue, la couche de revêtement peut être obtenue par enduction, par calandrage, extrusion ou pressage.

Il peut être nécessaire de procéder à un traitement des charges minérales par concassage, broyage, éventuellement lavage, micronisation, éventuellement séchage, et d'un tri par taille pour obtenir une distribution granulométrique adaptée aux procédés de mise en oeuvre de revêtement de sols ou murs, et aux propriétés d'usage attendues. Le but de ces opérations est de permettre d'atteindre des granulométries intégrables dans des compositions et procédés d'obtention de revêtements de sols et murs à partir de compositions de matières plastiques.

En pratique, il est préférable que les charges biosourcées non fossiles présentent une granulométrie D98 inférieure à 250 µm, voire inférieure à 150µm. (Le D98 correspond à la taille de particule pour laquelle 90% de l'échantillon se trouve en dessous de cette dimension).

Lorsqu'il s'agit de réaliser la couche par enduction, par exemple sous la forme d'un Plastisol gélifié, par exemple de PVC, il est préférable que les charges comprennent moins de 20% de particules d'une taille inférieure à 2 µm de manière à ne pas trop augmenter la viscosité du plastisol et faciliter son enduction.

De même, dans une couche obtenue par enduction, la couche comprend de préférence un additif absorbeur d'humidité pour assécher les charges pour qu'elles présentent un taux d'humidité inférieur à 0,5 %, et de préférence inférieur à 0,3% et éviter ainsi l'apparition de bulles dans la couche de plastique.

L'invention concerne également le procédé de fabrication d'un revêtement de sol ou mur comprenant au moins une couche composée de matière plastique et entre 30 et 300 PCR de charges minérales, remarquable en ce qu'il consiste à utiliser, en tant que charge, des charges minérales biosourcées non fossiles, représentant au moins 25%, et de préférence de 50 à 100% de la quantité des charges minérales.

La couche peut être réalisée de toute manière appropriée, par exemple par calandrage, par extrusion, pressage, ou par enduction.

De préférence, la couche est réalisée par enduction avec une étape d'incorporation des charges biosourcées non fossiles, les charges biosourcées non fossiles possédant un taux d'humidité inférieur à 0.5%, de préférence inférieur à 0,3%.

A cet effet, le procédé comprend une étape de séchage, par exemple par un flux d'air chaud, des charges biosourcées non fossiles, préalablement à leur incorporation dans la couche.

Indépendamment, ou en combinaison avec l'étape de séchage, le procédé peut comprendre une étape d'ajout d'additif absorbeur d'humidité dans la composition de la couche pour aider à obtenir et/ou à maintenir le taux d'humidité des charges biosourcées non fossiles inférieur à 0,5%, préférentiellement inférieur à 0,3%.

### Description détaillée de l'invention

L'invention concerne donc un revêtement de sol ou mur, et son procédé de fabrication, lequel revêtement comprend au moins une couche composée au moins d'une matière plastique et d'au moins une charge minérale, notamment dans une quantité comprise entre 30 et 300 PCR.

Selon l'invention, et afin de diminuer l'impact environnemental dudit revêtement et de son procédé de fabrication, la charge minérale de la couche est constituée d'au moins 25%, et de préférence de 50 à 100% d'une charge biosourcée non fossile. Plus la quantité de charge biosourcée non fossile est importante, plus l'impact environnemental est réduit.

Ainsi, la charge minérale utilisée est issue d'une ressource générée naturellement et renouvelable rapidement contrairement aux ressources fossiles épuisable et non renouvelable à une échelle de temps d'une centaine d'années.

Les charges biosourcées non fossiles comprennent, seules ou en mélange :
- de préférence au moins 90%, de poudre de carbonate de calcium, notamment issu de coquilles de mollusques, tels que des huîtres, des Saint-Jacques, des moules, de coquilles d'oeufs, de coquilles d'escargot, d'os de seiche, seul ou en mélange ;
- des cendres volantes issues d'une combustion de biomasse, telle qu'une combustion de bois, de liège, de fibres végétales, de boues de stations d'épuration, de rafles de maïs, de miscanthus, seules ou en mélange.

En fonction du conditionnement des charges reçues en vue de leur intégration dans la couche de revêtement, il peut être nécessaire d'inclure des étapes de concassage, broyage, éventuellement lavage, micronisation, éventuellement séchage, et d'un tri par taille de la charge minérale minéral. Le but de ces opérations et de permettre d'atteindre des granulométries intégrables dans des compositions et procédés d'obtention de revêtements de sols et murs à partir de matières plastiques.

En pratique, les charges biosourcées non fossiles présentent une granulométrie (D98) inférieure à 250 µm, voire inférieure à 150 µm, par exemple comprise entre 5 et 250 µm, préférentiellement entre 20 et 150µm.

Ceci permet notamment de garantir la bonne intégration dans la couche, mais également une viscosité adaptée au procédé d'enduction, de faciliter la dispersion dans une composition donnée, de réduire les risques de sédimentation et / ou de ségrégation dans des compositions préparées à l'avance, notamment dans les compositions de plastisol PVC liquides. D'autre part la granulométrie des charges recyclées à un impact sur les propriétés mécaniques des revêtements de sols, notamment leur rigidité, force et contrainte à la rupture. Une bonne granulométrie permet également d'éviter la formation de défauts d'aspect, notamment dans des couches calandrées ou enduites d'épaisseur fines, par exemple entre 0,1 et 2mm voire entre 0,1 et 1mm. Enfin, une bonne granulométrie permet d'optimiser les performances d'usage, notamment la résistance à la casse de moyens d'assemblages usinés sur des bords de revêtements en dalles ou lames. Le D98 correspond à la taille de particule pour laquelle 90% de l'échantillon se trouve en dessous de la dimension indiquée.

Le procédé peut également comprendre une étape consistant à séparer la matière minérale biosourcée non fossile d'autres matières non désirées afin d'éviter leur intégration dans le procédé de fabrication du revêtement de sol ou mur, car elles pourraient représenter un risque de dégradation des installations classiquement utilisées pour réaliser la couche de revêtement de sol ou de mur, telles que les installations de pressage, calandrage, extrusion ou enduction.

Le procédé peut également comprendre une étape consistant à dépolluer les charges minérales afin d'éviter l'intégration de polluants dans le procédé de fabrication de revêtement de sol ou mur. Cette étape peut par exemple comprendre un tri par taille et/ou une décantation.

Lorsqu'il s'agit de réaliser la couche de revêtement par enduction, les charges comprennent moins de 20% de particules d'une taille inférieure à 2 µm, et de préférence les charges biosourcées non fossiles possèdent un taux d'humidité inférieur à 0.5%, de préférence inférieur à 0,3%, mesurée avec une balance thermogravimétrique ou une mesure par test Karl Fisher. En pratique, on mesure la variation de poids d'un échantillon de 5g quand il est chauffé à 120°C.

Afin d'obtenir ce taux d'humidité, le procédé peut comprendre une étape de séchage des charges biosourcées non fossiles, par exemple par un flux d'air chaud, préalablement à leur incorporation dans la couche.

En alternative et/ou en complément, c'est-à-dire afin d'obtenir et/ou de maintenir ce taux d'humidité, la couche comprend un additif absorbeur d'humidité. L'additif testé est par exemple celui commercialité sous la marque déposée Byk^{®} - 2616, commercialisé par la société Altana, dans une quantité comprise entre 1 et 1,25% massique de la formule totale. Bien entendu, d'autres types d'additifs absorbeurs d'humidité peuvent être utilisés selon les connaissance générales de l'homme du métier, l'essentiel réside dans l'obtention d'un taux d'humidité des charges biosourcées non fossiles au moment de leur intégration dans la couche qui soit inférieur à 0,5%, préférentiellement inférieur à 0,3%.

La charges minérales biosourcées non fossiles et revalorisées présentent un caractère recyclé selon la définition de la norme ISO 14021:2016.

Cette norme définie une ressource recyclée comme une caractéristique d'un produit qui peut être détourné d'un flux habituel de déchets à travers les processus disponibles et programmes et peut être collecté, traité et réutilisé sous forme de matières premières.

La couche du revêtement selon l'invention peut être réalisée en toute matière plastique appropriée. Par exemple, la matière plastique est choisie parmi les polyoléfines, telles que le polyéthylène (PE) et le polypropylène (PP), le polychlorure de vinyle (PVC), le polybutyral de vinyle (PVB), l'acide polylactique (PLA), le polyuréthane thermoplastique (TPU), les dérivés cellulosiques, le linoléum, les élastomères, seuls ou en mélange.

De façon préférentielle, la couche de revêtement composée est obtenue par enduction, et se présente par exemple sous la forme d'un plastisol gélifié, notamment de PVC.

L'invention a en effet un intérêt plus particulier dans le cas d'un procédé d'obtention d'une couche de PVC comprenant une charge minérale biosourcée non fossile par enduction puis gélification d'un plastisol. En effet, contrairement aux procédés de calandrage, pressage ou extrusion, les procédés par enduction de plastisol ne permettent pas d'incorporer directement dans le plastisol des broyats de revêtements recyclés provenant de chutes de pose ou d'autres sources. Le plastisol n'est par définition pas gélifié en amont du procédé de fabrication de la couche et présente une viscosité difficilement compatible à un mélange contenant des granulés ou copeaux de matières plastiques déjà gélifiés. Dans un plastisol, l'introduction de PVC recyclé ou de produits obtenus à partir de PVC recyclé, même micronisé, augmente considérablement la viscosité des plastisols, rendant difficile leur application par enduction à l'aide d'une racle notamment. L'invention concerne donc également une composition pour la réalisation d'un plastisol à partir de PVC comprenant une charge minérale biosourcée non fossile. L'invention permet ainsi la réalisation de couches et revêtements obtenus à partir de procédés d'enduction dont l'empreinte environnementale est réduite.

De façon avantageuse la composition de la couche comprenant une charge minérale biosourcée non fossile et comprend également une charge minérale vierge. Cette charge est par exemple choisie parmi les argiles, de la silice, du kaolin, du talc, de la craie, de la chaux, du talc, du carbonate de calcium, seules ou en combinaison.

De façon avantageuse la composition de ladite couche comprend également une charge végétale et/ou synthétique.

Comme évoqué, la couche de revêtement selon l'invention peut également être obtenue par un procédé de pressage, de calandrage ou d'extrusion au travers d'une filière plate.

Dans le cas du PVC, des procédés pouvant être utilisés sont également le pressage de granulés réalisés à partir d'une composition comprenant du PVC et une charge minérale biosourcée non fossile et mélangés à chaud et gélifiés ou encore par enduction de plastisol de PVC.

Les procédés de calandrage, d'extrusion ou de pressage ont l'avantage de permettre l'incorporation de broyat de chutes de pose de revêtement ou de broyat de revêtements déposés suite à leur renouvellement. Pour cela les chutes ou revêtements sont récupérés, broyés puis intégrés en granulés ou copeaux dans la composition en amont des procédés de calandrage, pressage ou extrusion. Selon l'invention, la composition de la couche comprenant une charge minérale biosourcée non fossile comprend avantageusement également des broyats ou granulés de revêtements de sols ou murs, notamment de revêtements de sols ou murs PVC. En fonction de la quantité de matière recyclée introduite on diminue d'autant l'empreinte environnementale de la couche obtenue, notamment son impact en kilos de CO₂ équivalent mesuré selon les normes ISO 14040, ISO14044 et EN15804 déterminant l'Analyse de Cycle de Vie d'un produit.

Le revêtement de sol ou mur selon l'invention peut consister en une couche composée de matière plastique et d'une charge minérale biosourcée non fossile pour former un revêtement de sol homogène ou plusieurs couches liées entre elles pour former un revêtement de sol hétérogène, dont au moins une des couches comprend une charge minérale biosourcée non fossile.

Selon un mode de réalisation particulier, le revêtement de sol ou mur selon l'invention ne comprend que ladite couche composée de matière plastique et de charge minérale non fossile de manière à former un revêtement de sol homogène.

Selon un mode de réalisation particulier, ladite couche comprenant une charge minérale non fossile comprend une face liée à au moins une couche d'envers. De cette manière, il est obtenu un revêtement de sol hétérogène.

Il est présenté par la suite un exemple comparatif de revêtement de sol sous forme de rouleau destiné à être collé au sol lors de la pose.

Le revêtement de sol est une revêtement multicouche composé successivement et de la couche inférieure, destinée à être en contact avec le sol, vers la couche supérieure, destinée à être en contact avec l'utilisateur : d'une couche d'envers compacte appelée compact de lissage (CL), d'un semi-ouvré (CI-CD) comprenant une couche compacte d'imprégnation (CI), un voile de verre et une couche compacte décor (CD) imprimée. Cette couche décor (CD) est ensuite recouverte d'une couche d'usure transparente non chargée (CU), elle-même vernie. La couche d'usure transparente est obtenue par enduction et gélification d'un plastisol PVC plastifié non chargé. Le semi-ouvré est obtenu à partir de l'enduction et de la gélification sur chaque face d'un voile de verre des couches compactes d'imprégnation (CI) et compact décor (CD) à partir de plastisol PVC plastifié comprenant une charge minérale. La couche compacte de lissage (CL) est obtenue par enduction et gélification d'un plastisol PVC plastifié comprenant une charge minérale.

La couche d'usure transparente présente une épaisseur de 0,65 mm, le compact décor (CD) de 0,2 mm, le compact d'imprégnation (CI) de 0,6 mm, le compact de lissage (CL) de 0,6 mm. Le voile de verre est noyé dans l'épaisseur du semi-ouvré (CI-CD). L'épaisseur de vernis est inférieure à 10µm.

Ce revêtement de sol est donc obtenu par un procédé d'enduction multicouche en plusieurs étapes.

Pour cet exemple comparatif, des performances d'usage d'un revêtement de sol de référence avec un compact de lissage obtenu en enduction de formule A, sont comparées avec celles de revêtements de sol selon l'invention dans lesquels le compact de lissage comprend une charge minérale biosourcée non fossile issue de coquille d'huîtres de formule B1, et une charge minérale biosourcée non fossile issue de coquille d'oeufs de formule B2. Les formules A, B1 et B2 des compacts de lissage sont résumées dans le tableau 1.

**[Tableaux 1]**

| | Formule A | | Formule B1/B2 | |
|---|---|---|---|---|
| | Parties Pour Cent parties de Résine (pcr) | Pourcentage massique | Parties Pour Cent parties de Résine (pcr) | Pourcentage massique |
| Plastifiants | 60,8 | 21,87 | 60,8 | 21,87 |
| Additifs | 2,3 | 0,81 | 2,3 | 0,81 |
| PVC | 100 | 35,96 | 100 | 35,96 |
| Charge minérale fossile | 115 | 41,36 | 57,5 | 20,68 |
| Charge minérale biosourcée non fossile | 0 | 0 | 57,5 | 20,68 |
| TOTAL FORMULE | 278,1 | 100,0 | 278,1 | 100,0 |

Pour les formules A, B1 et B2, on trouvera comme additifs : des stabilisants et co-stabilisants thermiques, du pigment et des aides-procédé.

Les performances des revêtements obtenus avec les formules A, B1 et B2 sont résumées dans le tableau 2.

**[Tableaux2]**

| Caractéristiques | Unités | Revêtement de sol comprenant un compact de lissage selon la Formule A - charge minérale standard | Revêtement de sol comprenant un compact de lissage selon la Formule B1 - charge minérale coquilles d'huîtres | Revêtement de sol comprenant un compact de lissage selon la Formule B2 - charge minérale coquilles d'oeufs |
|---|---|---|---|---|
| Rhéologie - viscosité Brookfield à t+2h | Pa.s | 13750 (26,5°C) | 18500 (27,1°C) | 17200 (28,1°C) |
| Densité | g/cm3 | 1,52 | 1,47 | 1,47 |
| Granulométrie (D98) | µm | 30 | 50 | 22 |
| Taux humidité charge | % | 0.2 | 0,25 | 0,28 |
| Déchirure (NF EN ISO 24345 Avril 2012) | daN | 1,69 | 1,14 | 1,22 |
| Allongement (NF EN ISO 1421 Décembre 2017) | % | 180,6 | 112,2 | 139 |
| Charge à la rupture (NF EN ISO 1421 Décembre 2017) | N/mm² | 6,1 | 4,5 | 4,9 |

Le tableau 2 montre que les revêtements de sol selon l'invention, formules B1 et B2 présente de très bonnes performances d'usage d'un revêtement de sol enduit, comparativement au sol de référence de même architecture, mais produit avec un complexe de lissage contenant une charge minérale standard, c'est-à-dire du carbonate de calcium obtenu par l'exploitation d'une carrière de calcaire génératrice de nuisances sonores et de pollutions. Ce tableau montre également un allégement du revêtement de sol démontré par la diminution de sa densité, tout en proposant de très bonnes performances d'usage.

La viscosité a été mesurée avec un viscosimètre rotatif du type « Brookfield » avec le mobile n° 7, qui mesure la viscosité en analysant le couple exigé pour faire tourner le mobile à une vitesse constante dans un liquide immergé. Le couple est proportionnel à la traînée visqueuse sur le mobile donc à la viscosité de l'échantillon.

En comparaison, les charges biosourcées non fossiles utilisées dans les formules B1 et B2, proviennent de déchets naturels non fossiles et revalorisés, et a donc évité de faire exploser ou de davantage creuser intentionnellement une falaise dans le seul but de produire une charge fine. La revalorisation de ces sous-produits a donc évité une nouvelle exploitation irréversible d'une ressource naturelle non renouvelable à l'échelle du temps humain.

Un autre exemple comparatif des performances d'usage d'un revêtement de sol de référence avec une sous-couche obtenu par calandrage de formule A, sont comparées avec celles de revêtements de sol selon l'invention dans lesquels la sous-couche comprend une charge minérale biosourcée non fossile issue de coquille d'huîtres de formule B1, et une charge minérale biosourcée non fossile issue de coquille d'oeufs de formule B2. Les formules A, B1 et B2 des sous-couches sont résumées dans le tableau 3.

**[Tableaux3]**

| | Formule A | | Formule B1/B2 | |
|---|---|---|---|---|
| | Parties Pour Cent parties de Résine (pcr) | Pourcentage massique | Parties Pour Cent parties de Résine (pcr) | Pourcentage massique |
| Plastifiants | 23 | 7,52 | 23 | 7,52 |
| Additifs | 8 | 2,61 | 8 | 2,61 |
| PVC | 100 | 32,68 | 100 | 32,68 |
| Charge minérale 1 fossile | 110 | 35,95 | 0 | 0 |
| Charge minérale 2 fossile | 65 | 21,24 | 65 | 21,24 |
| Charge minérale biosourcée non fossile | 0 | 0 | 110 | 35,95 |
| TOTAL FORMULE | 306 | 100,0 | 306 | 100,0 |

Pour les formules A, B1 et B2, on trouvera comme additifs : des stabilisants et co-stabilisants thermiques, du pigment et des aides-procédé.

Les performances des revêtements obtenus avec les formules A, B1 et B2 sont résumées dans le tableau 4.

**[Tableaux4]**

| Caractéristiques | Unités | Revêtement de sol comprenant une sous-couche selon la Formule A - charge minérale standard | Revêtement de sol comprenant une sous-couche selon la Formule B1 - charge minérale coquilles d'huîtres | Revêtement de sol comprenant une sous-couche selon la Formule B2 - charge minérale coquilles d'oeufs |
|---|---|---|---|---|
| Souplesse - couple de torsion max à 23°C | N.m | 0,81 | 0,94 | 0,83 |
| Densité | g/cm3 | 1,72 | 1,66 | 1,64 |
| Granulométrie (D98) | µm | 30 | 50 | 22 |
| Module en Flexion (NF EN ISO 178 ) | MPa | 2040 | 1908 | 1680 |
| Stabilité dimensionnelle (NF EN ISO 23999 Août 2018) | Sens long % | -0,03 | -0,03 | -0,02 |
| | Sens travers % | -0,05 | -0,01 | -0,03 |
| Incurvation spontanée 6h à 80°C (NF EN ISO 23999 Août 2018) | Mm | 0,19 | 0,11 | 0,14 |
| Dilatation entre 12 et 38°C | Sens long % | 0,12 | 0,08 | 0,12 |
| | Sens travers % | 0,13 | 0,14 | 0,15 |

Le procédé d'obtention par calandrage, ni même celui d'extrusion pressage ne nécessite pas d'opération de séchage préalable des charges minérales biosourcées non fossiles, ni même l'ajout d'additif absorbeur d'humidité.

Les résultats ci-avant montrent que les revêtements de sol selon l'invention, formules B1 et B2 présentent de très bonnes performances d'usage d'un revêtement de sol calandré, comparativement au sol de référence de même architecture, mais produit avec une sous-couche calandrée contenant une charge minérale standard, c'est-à-dire du carbonate de calcium fossile obtenu par l'exploitation d'une carrière de calcaire. Ce tableau montre également un allégement du revêtement de sol démontré par la diminution de sa densité, tout en proposant de très bonnes performances d'usage.

L'invention permet donc une diminution de l'empreinte carbone du revêtement et de son procédé d'obtention, une diminution de la pollution visuelle et auditive, de l'émission de poussières et de dégradation des ressources fossiles en utilisant une ressource d'origine naturelle et biologique et renouvelable, par exemple mais non limitativement destinée au recyclage ou à la revalorisation. En intégrant ces charges minérales biosourcées non fossiles, l'impact environnemental lié à la réalisation du revêtement de sol est réduit.

## Revendications

1. Revêtement de sol ou mur comprenant au moins une couche composée de matière plastique, tel que du polychlorure de vinyle, et de charges minérales, notamment entre 30 et 300 PCR de charges minérales, ***caractérisé* en ce que** les charges minérales sont constituées d'au moins 25%, et de préférence de 50 à 100% de charges minérales biosourcées non fossiles.

2. Revêtement selon la revendication 1, ***caractérisé* en ce que** les charges biosourcées non fossiles comprennent, de préférence au moins 90%, de poudre de carbonate de calcium, notamment issu de coquilles de mollusques, tels que des huîtres, des Saint-Jacques, des moules, de coquilles d'oeufs, de coquilles d'escargot, d'os de seiche, seul ou en mélange.

3. Revêtement selon l'une des revendications précédentes, ***caractérisé* en ce que** les charges biosourcées non fossiles comprennent des cendres volantes issues d'une combustion de biomasse, telle qu'une combustion de bois, de liège, de fibres végétales, de boues de stations d'épuration, de rafles de maïs, de miscanthus, seules ou en mélange.

4. Revêtement selon l'une des revendications précédentes, ***caractérisé* en ce que** les charges biosourcées non fossiles présentent une granulométrie D98 inférieure à 250 µm, voire inférieure à 150 µm.

5. Revêtement selon l'une des revendications précédentes, ***caractérisé* en ce que** les charges minérales comprennent moins de 20% de particules d'une taille inférieure à 2 µm.

6. Revêtement selon l'une des revendications précédentes, ***caractérisé* en ce que** la couche comprend un additif absorbeur.

7. Revêtement selon l'une des revendications précédentes, ***caractérisé* en ce que** la matière plastique est choisie parmi les polyoléfines, telles que le polyéthylène (PE) et le polypropylène (PP), le polychlorure de vinyle (PVC), le polybutyral de vinyle (PVB), l'acide polylactique (PLA), le polyuréthane thermoplastique (TPU), les dérivés cellulosiques, le linoléum, les élastomères, seuls ou en mélange.

8. Procédé de fabrication d'un revêtement de sol ou mur comprenant au moins une couche composée de matière plastique, tel que du polychlorure de vinyle, et entre 30 et 300 PCR de charges minérales, ***caractérisé* en ce qu'**il consiste à utiliser, en tant que charge minérale, des charges minérales biosourcées non fossiles, représentant au moins 25%, et de préférence de 50 à 100% de la quantité des charges minérales.

9. Procédé selon la revendication 8, ***caractérisé* en ce que** la couche est réalisée par enduction avec une étape d'incorporation de charges biosourcées non fossiles possédant un taux d'humidité inférieur à 0.5%, de préférence inférieur à 0.3%.

10. Procédé selon la revendication 9, ***caractérisé* en ce qu'**il comprend une étape de séchage des charges biosourcées non fossiles, préalablement à leur incorporation dans la couche.

11. Procédé selon l'une des revendications 9 à 10, ***caractérisé* en ce qu'**il comprend une étape d'ajout d'additif absorbeur d'humidité dans la couche.
